Europäisches Patentamt

European Patent Office

Office européen des brevets

(19)

(11) **EP 0 826 628 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.⁷: **C01B 21/082**

(21) Anmeldenummer: **97114240.1**

(22) Anmeldetag: **18.08.1997**

(54) **SiCN-Gele als Vorstufen zur nichtoxidischen Silicium-Keramiken**

SiCN gels as precursors of non oxide silicon ceramics

Gels de SiCN comme précurseurs de céramiques au silicium non oxydées

(84) Benannte Vertragsstaaten:
**CH DE FR GB IT LI NL SE**

(30) Priorität: **29.08.1996 DE 19634799**

(43) Veröffentlichungstag der Anmeldung:
**04.03.1998 Patentblatt 1998/10**

(73) Patentinhaber: **BAYER AG**
**51368 Leverkusen (DE)**

(72) Erfinder:
• **Riedel, Ralf, Prof. Dr.**
**64832 Babenhausen (DE)**
• **Gabriel, Andreas**
**64319 Pfungstadt (DE)**

(56) Entgegenhaltungen:
**DE-A- 4 430 817          DE-A- 19 502 095**

• **KIENZLE A. ET AL: "nanosized si-c-n-powder by pyrolysis of highly crosslinked silylcarbodiimide" NANOSTRUCTURED MATERIALS, Bd. 6, 1995, Seiten 349-352, XP002050919**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft neuartige SiCN-Gele, die durch Umsetzung von Silylcarbodiimiden $R_3Si-NCN-SiR_3$ (R = Alkyl, Aryl) mit Silanen $RSiX_3$ (R = H, Alkyl, Aryl; X= F, Cl, Br, I) erhalten werden und deren Verwendung zur Herstellung nichtoxidischer Silicium-Keramiken.

Aus DE-OS 44 30 817 gehen polymere Keramikvorstufen hervor, die durch Umsetzung von Bis(trialkylsilyl)carbodiimid mit Halogeniden der Gruppen IIIA, IVA und VA des Periodensystems erhalten werden. Insbesondere ist dort die Umsetzung von Bis(trimethylsilyl)carbodiimid mit Siliciumtetrachlorid beschrieben. Dabei wird jedoch kein SiCN-Gel gebildet. Darüber hinaus wird bei der Pyrolyse des Reaktionsprodukts bereits bei Temperaturen ab 400°C das Auftreten kristalliner Phasen beobachtet; es gelingt nicht, vollständig amorphe keramische Substanzen herzustellen.

Es wurde nun gefunden, daß sich durch Umsetzung von Silylcarbodiimiden und (Alkyl)trihalogensilanen polymere Keramikvorstufen in Form stabiler Gele herstellen lassen, die eine geringe Porosität aufweisen und sich durch Pyrolyse in Inert- oder Reaktivatmosphäre in nichtoxidische Siliciumkeramiken umwandeln lassen, die erst ab etwa 1450°C auskristallisieren.

Gegenstand der Erfindung sind somit SiCN-Gele, erhältlich durch Umsetzung von Silylcarbodiimiden $R_3Si-NCN-SiR_3$ (R = Alkyl, Aryl) mit Silanen $RSiX_3$ (R = H, Alkyl, Aryl, X = F, Cl, Br, I) unter Zusatz von Basen. Gegenstand der Erfindung ist weiterhin die Verwendung der erfindungsgemäßen SiCN-Gele zur Herstellung von Keramikpulvern, Beschichtungen, Formteilen, Fasern und Membranen sowie zur Infiltration poröser Substrate.

Ausgangskomponenten der erfindungsgemäßen SiCN-Gele sind Silylcarbodiimide des Typs $R_3Si-NCN-SiR_3$, wobei R eine Alkyl- oder Arylgruppe, insbesondere eine Methyl-, Ethyl- oder Phenylgruppe symbolisiert, und (Alkyl)trihalogensilane des Typs $RSiX_3$, wobei R ein Wasserstoffatom oder eine Alkyl- oder Arylgruppe, insbesondere eine Methyl-, Ethyl-, Propyl-, Isopropyl- oder Phenylgruppe sein kann, und X für Fluor, Chlor, Brom oder Iod steht. Die Bildung der erfindungsgemäßen SiCN-Gele wird durch den Zusatz einer Base katalysiert. Als Katalysator wird Pyridin in Mengen von 0,01 bis 1,5 Äquivalenten, bezogen auf die molare Menge an (Alkyl)trihalogensilan, zugesetzt.

Die Bildung der erfindungsgemäßen SiCN-Gele erfolgt nach folgender Bruttoreaktion:

$$n\ RSiX_3 + 1{,}5n\ R'_3Si-NCN-SiR'_3 \rightarrow$$
$$[RSi(NCN)_{1{,}5}]_n + 3n\ R'_3SiX$$

In einer besonderen Ausführungsform der Erfindung werden die erfindungsgemäßen SiCN-Gele hergestellt, indem Ausgangskomponenten und Katalysator vermischt werden und die Mischung solange gerührt wird, bis der Gelierpunkt erreicht ist. Die Reaktionszeit hängt dabei ab von der zugesetzten Menge an Base, der Reaktionstemperatur und der Rührgeschwindigkeit. Sie beträgt in der Regel zwischen 10 Minuten und 15 Stunden. Zweckmäßigerweise wird man die Temperatur für die Reaktion auf einen Wert zwischen Raumtemperatur und etwa 80°C einstellen.

In einer weiteren Variante wird die Reaktion bei Raumtemperatur ohne Rühren durchgeführt. Die erforderliche Reaktionszeit ist hierbei naturgemäß länger und kann bis zu mehreren Wochen betragen.

Die Umsetzung der Edukte erfolgt meist in Substanz, die Herstellung der erfindungsgemäßen SiCN-Gele kann jedoch auch in inerten Lösungsmitteln wie THF, Diethylether oder Toluol durchgeführt werden.

Die erfindungsgemäßen SiCN-Gele können nach ihrer Herstellung einem Trocknungsschritt unterzogen werden, bei dem leichtflüchtige Reaktionsprodukte, Katalysator und gegebenenfalls Lösungsmittel entfernt werden. Dies geschieht bevorzugt unter vermindertem Druck, bei Raumtemperatur oder erhöhter Temperatur. Man erhält ein Xerogel, das je nach Trocknungsbedingungen in kompakter oder Pulverform anfällt. Eine Besonderheit dieses Xerogels ist seine geringe Porosität; die zugängliche Oberfläche beträgt weniger als 1, bevorzugt sogar weniger als 0,1 $m^2/g$ (bestimmt durch BET-Messungen).

In einer weiteren Ausführungsform läßt man die erfindungsgemäßen SiCN-Gele vor dem Trocknungsschritt bei Temperaturen von bis zu 54°C altern, wobei ein dreidimensionaler Schrumpfungsprozeß stattfindet. Dieser ist bei Gelschichten nach mehreren Minuten bis einigen Stunden abgeschlossen, während er bei Formkörpern ca. 5 Tage bis 8 Wochen dauert. Nach Trocknung lassen sich so transparente, rißfreie Formkörper aus Xerogel erhalten.

Die erfindungsgemäßen SiCN-Gele können vor der Alterung/Trocknung den verschiedensten Formgebungsverfahren wie Gießen, Extrudieren, Faserziehen usw. unterzogen werden. Auf diesem Wege lassen sich nach anschließender Pyrolyse keramische Beschichtungen, monolithische Formkörper und Komposite, Fasern oder Membranen erhalten.

Die erfindungsgemäßen SiCN-Gele eignen sich auch zur Infiltration poröser Substrate, die beispielsweise aus Keramiken oder Kohlenstoff bestehen können. In einer bevorzugten Ausführungsform werden die zu infiltrierenden Substrate in eine Mischung der Ausgangskomponenten eingebracht; anschließend wird durch Zugabe des Katalysators die Umsetzung gestartet. Die erfindungsgemäßen SiCN-Gele bilden sich dann in situ und füllen die Poren des Substrats.

Die Umwandlung der erfindungsgemäßen SiCN-Gele zu nichtoxidischen Silicium-keramiken erfolgt durch Pyrolyse in Inertatmosphäre, z.B. Argon, Helium, Stickstoff oder in Reaktivatmosphäre, z.B. Ammoniak. Dies ermöglicht die Einstellung des Kohlenstoffgehalts im Endprodukt. Die Pyrolysetemperatur kann bis zu 1400°C betragen, wenn eine amorphe Keramik hergestellt werden soll. Ab etwa 1450°C kristallisiert das Produkt aus.

## Beispiele

Alle Reaktionen wurden in ausgeheizten Glasgeräten unter einem getrocknetem Argonstrom durchgeführt. Die IR- (KBr Preßling) und RAMAN-Proben wurden unter Schutzgasatmosphäre präpariert und vermessen. Die STA Messungen (Netzsch 429 mit Massenspektrometer Balzers QMG 420) erfolgten unter Helium mit einer Aufheizrate von 2 K min$^{-1}$.

## Beispiel 1

### [MeSi(NCN)$_{1.5}$]$_n$ (Gelkörper)

In einem 100 ml Schutzgaskolben wurden 20.0 g (107 mmol) Bis(trimethylsilyl)carbodiimid eingewogen und mit 10.7 g (71.6 mmol) Methyltrichlorsilan versetzt. Nach Zugabe von 566 mg (10.7 mmol) Pyridin wurde auf 90°C Ölbadtemperatur erhitzt. Nach 13 h war der Gelierungspünkt erreicht. Zur Alterung wurde der Reaktionsansatz bei 45°C ausgelagert. Nach abgeschlossenem Alterungsprozeß wurde die überstehende Flüssigkeit abgegossen und die restliche flüssige Phase bei 50°C unter Schutzgas abkondensiert, wobei ein transparenter Formkörper erhalten wurde.

Die thermisch induzierte Keramisierung des Xerogels wurde mittels simultaner Thermoanalyse (STA) im Temperaturbereich zwischen Raumtemperatur und 1500°C in He untersucht. Demzufolge betrug die keramische Ausbeute 60 %. Im Temperaturbereich von 560 - 590°C wurde ein Massenverlust von 20 %, begleitet von einer exothermen Reaktion, gemessen. Die in-situ massenspektroskopisch bestimmten Zersetzungsprodukte konnten überwiegend als Methan- (m/z = 16) und Acetonitril- bzw. Methylisonitril (m/z = 41) und deren Fragmente identifiziert werden. Zwischen 850 und 1120°C trat nochmals ein 10%iger Massenverlust auf, welcher ausschließlich auf Stickstoffabspaltung beruht.

FT-IR (KBr-Pressling): $\nu$ [cm$^{-1}$] = 2965 (SiMe), 2152 (NCN), 1270 (SiMe), 748 (SiN); RAMAN: $\nu$ [cm$^{-1}$] = 2974 (SiMe), 2906 (SiMe), 1533 (NCN); $^{29}$Si-CP/ MAS-NMR (300 MHz): $\delta$ = -62.3 ppm; C$_{2.5}$H$_3$N$_3$Si (103.16): berechnet C 29.11, N 40.73, O 0.00, Si 27.23; gefunden C 28.75, N 38.3, O 0.28, Si 26.9; Pyrolysat (700°C) C 19.0, N 44.8, O 0.26; Pyrolysat (1200°C) C 21.1, N 34.4, O 0.32.

## Beispiel 2

### In-situ Beschichtungen/Infiltrationen

In einem Quarzgefäß wird Toluol als Lösungsmittel vorgelegt. In dieses wird ein poröses Substrat eingetaucht, oder es wird ein zu beschichtendes Keramikpulver darin suspendiert. Anschließend werden Ausgangskomponenten in stöchiometrischem Verhältnis und Katalysator zugegeben, und es wird zum Sieden erhitzt. Nach erfolgter Reaktion werden die flüssigen Bestandteile unter vermindertem Druck abdestilliert, und das polymerbeschichtete Substrat wird bei 1000°C pyrolysiert.

## Patentansprüche

1. SiCN-Gel, erhältlich durch Umsetzung von Silylcarbodiimiden R$_3$Si-N=C=N-SiR$_3$ (R = Alkyl, Aryl) mit Silanen RSiX$_3$ (R = H, Alkyl, Aryl; X = F, Cl, Br, I) unter Zusatz von Basen.

2. Verwendung der SiCN-Gele gemäß Anspruch 1 zur Herstellung von Keramikpulvern, Beschichtungen, Formteilen, Fasern und Membranen sowie zur Infiltration poröser Substrate.

## Claims

1. SiCN gel obtainable by reacting silylcarbodiimides R$_3$Si-N=C=N-SiR$_3$ (R = alkyl, aryl) with silanes RSiX$_3$ (R = H, alkyl, aryl; X = F, Cl, Br, I) with addition of bases.

2. Use of SiCN gels according to Claim 1 for producing ceramic powders, coatings, mouldings, fibres and membranes and for infiltration of porous substrates.

## Revendications

1. Gel de SiCN qui peut être obtenu par réaction de silylcarbodiimides R$_3$Si-N=C=N-SiR$_3$ (R = alkyle, aryle) avec des silanes RSiX$_3$ (R = H, alkyle, aryle ; X = F, Cl, Br, I) avec addition de bases.

2. Utilisation des gels de SiCN selon la revendication 1 pour la production de poudres céramiques, de revêtements, de pièces mises en forme, de fibres et de membranes ainsi que pour l'infiltration de substrats poreux.